(19) Europäisches Patentamt

European Patent Office

Office européen des brevets

(11) EP 1 605 447 A2

(12) EUROPEAN PATENT APPLICATION

(43) Date of publication:
14.12.2005 Bulletin 2005/50

(51) Int Cl.⁷: **G11B 7/095**

(21) Application number: 05253532.5

(22) Date of filing: 09.06.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **10.06.2004 KR 2004042674**

(71) Applicant: **SAMSUNG ELECTRONICS CO., LTD.**
**Suwon-si, Gyeonggi-do (KR)**

(72) Inventors:
• **Kang, Kyung-pil**
**Gwanak-gu,Seoul (KR)**

• **Kim, Min-seok,**
**Yeongtong-gu,Suwon-si, Gyeonggi-do (KR)**
• **Kim, Jong-kyn**
**Yeongtong-gu, Suwon-si,Gyeonggi-do (KR)**
• **Ahn, Yong-jin**
**Seocho-gu,Seoul (KR)**

(74) Representative: **Davies, Robert Ean et al**
**Appleyard Lees,**
**15 Clare Road**
**Halifax HX1 2HY (GB)**

(54) **Optical disc device capable of compensating for skew of optical pickup and skew compensating method**

(57) An optical disc device capable of recording/reproducing data in an optical disc (200). The optical disc device includes an optical pickup unit (110) for scanning a laser signal onto a specified area of an optical disc (200), a skew adjustment unit (160) for changing a skew of the optical pickup unit (110), a signal detection unit (120) for detecting a signal being reproduced from the optical disc by the laser signal, a jitter detection unit (140) for calculating a jitter of the signal detected by the signal detection unit (120), and a control unit (130) for controlling the skew adjustment unit to compensate for the skew of the optical pickup unit so that the compensated skew of the optical pickup unit (110) becomes the skew that corresponds to the minimum jitter. The optical disc device can minimize a jitter by compensating for the skew so that the skew is in an optimum state.

FIG. 3

EP 1 605 447 A2

**Description**

The present Invention relates to an optical disc device and a skew compensating method that can minimize a jitter by compensating for a skew of an optical pickup.

As the spread of computers Increases, the development of various kinds of peripheral devices and constituent elements for using a computer more efficiently and improving the performance of computers has been accelerated. This is especially true in the case of auxiliary storage media that serve to back-up stored programs and data even if the power supply to the computer is intercepted. Diverse kinds of storage media have been developed and spread. Generally used auxiliary storage media may be magnetic storage media and optical disc storage media.

The magnetic storage medium, which stores data using a magnetic force such as a floppy disc, hard disc, etc., has a small storage capacity, and thus in order to store recent multimedia data, several dozen discs may be required.

Optical disc devices (or laser disc devices) have been developed to have relatively large capacity when compared to magnetic discs and can be searched at a high-speed. For these reasons optical disc devices are widely used. The optical disc devices may use CD_ROM, digital versatile disc (DVD), etc.

An optical disc Is a recording medium on to which data is optically recorded in or reproduced from. Ones '1' or Zeros '0' are recorded on a specified track of the optical disc by making prominences and depressions on the track using a laser beam, and the data recorded on the track is reproduced through the detection of a reflected light and a transmitted light obtained by shining a laser beam on the track.

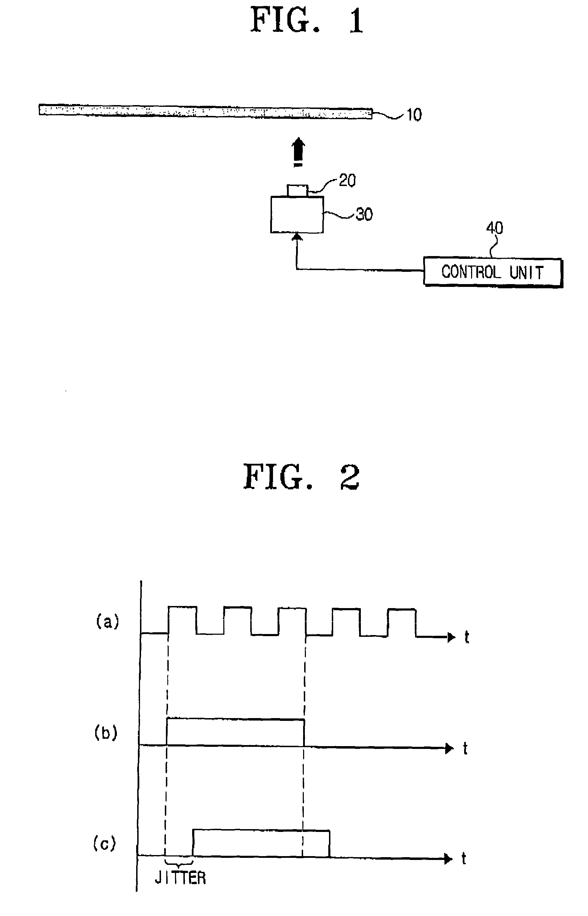

FIG. 1 is a view illustrating a conventional optical disc device. Referring to FIG. 1, the optical disc device Includes a light source 20 for irradiating a laser beam onto a surface of an optical disc 10, an actuator 30 for adjusting the tracking and focusing of the light source 20, and a control unit 40.

The light source 20 irradiates a laser signal onto the surface of the optical disc 10 In order to record or reproduce data. The control unit 40 performs a tracking operation for moving the light source 20 horizontally by controlling the actuator 30. Also, the control unit 40 may control the focus by lifting the light source 20 vertically.

It is preferable that in order to stably record/reproduce Information on a high-density optical disc such as a DVD-ROM, the angle between an optical axis of the laser signal emitted from the light source 20 and the surface of the optical disc 10 is a right angle. If a tilt occurs due to a twist or tilt of the surface of the optical disc 10, or a skew of the light source 20 or the actuator 30 occurs, the scanning angle of the laser signal may not be a right angle. In this case, a jitter may occur during the reproduction of data. A jitter means that the data signal being reproduced from the recording medium is not synchronized with a clock signal due to the vibration or trembling of the wave of the reproduced data signal. The jitter may affect the processing capability of the control unit 40, or obstruct the proper process of the reproduced signal to cause the loss of the data. Accordingly, it is preferable to reduce the jitter as far as possible.

FIGS. 2A to 2C are views provided for explaining the jitter phenomenon generated when the reproduced signal is detected in a clock-to-data (C/D) manner. If a clock CLK signal as shown in FIG. 2A is generated with a predetermined period, a data signal of a predetermined size as shown In FIG. 2B is recorded in the optical disc 10, In this case, If the jitter occurs, the data signal is not synchronized with the clock signal as shown In FIG. 2C.

Since the optical disc device having the above-described defect reproduces a data signal that includes a jitter, the loss of data as described above may unexpectedly occur.

Japanese Laid-open Patent Nos. 9-212891 and 9-245357 disclose the reduction of a jitter by detecting a tilt of a light source or an actuator using a tilt sensor and then compensating for the detected tilt. If the tilt sensor is used, however, the light source or actuator cannot be Installed in the same position as the tilt sensor, and this prevents accurate tilt angle from being obtained and the whole size of the device is increased.

Preferred embodiments of the present invention have been developed in order to address the above drawbacks and other problems associated with the conventional arrangement..

According to a first aspect of the present invention there is provided an optical disc device for recording/reproducing data in an optical disc, comprising: an optical pickup unit for scanning a laser signal onto a specified area of an optical disc; a skew adjustment unit for changing a skew of the optical pickup unit; a signal detection unit for detecting a signal being reproduced from the optical disc by the laser signal; a jitter detection unit for calculating a jitter of the signal detected by the signal detection unit; and a control unit for controlling the skew adjustment unit to compensate for the skew of the optical pickup unit so that the compensated skew of the optical pickup unit becomes the skew that corresponds to the minimum jitter.

By searching for an optimum skew as changing the skew of an optical pickup within a predetermined range during a data recording procedure and then compensating for the skew according to a result of search jitter can be minimized, leading to better recording/reproduction.

Suitably, the control unit records data in the specified area of the optical disc while changing the skew of the optical pickup unit within a specified range, calculates jitters corresponding to respective skews by reproducing the recorded data for respective areas, and then searches for the minimum jitter.

Suitably, the optical pickup unit comprises a light source for outputting the laser signal, an actuator, combined with the light source, for adjusting a beam spot of the laser signal of the light source, a first focusing coil, connected to one side of the actuator, for lifting the actuator, and a second focusing coil, connected to the other side of the actuator, for lifting the actuator.

Suitably, the skew adjustment unit may change the skew by adjusting respective lifting operations by applying specified drive voltages to the first and second focusing coils.

Suitably, the optical disc device may further include a memory for recording information about a position of the optical disc where the data is recorded and the skew when the data is recorded.

According to a second aspect of the present invention there is produced a skew compensating method for an optical disc device having an optical pickup unit for recording/reproducing data by scanning a laser signal onto an optical disc, the method comprising: recording the data on a specified area of the optical disc while changing a skew of the optical pickup unit within a predetermined range; detecting a jitter as reproducing the data for respective areas on the optical disc; and setting the skew of the optical pickup unit to the skew that corresponds to the minimum jitter.

Suitably, the skew compensating method further includes the step of storing information about a position of the optical disc where the data is recorded and the skew in the position where the data is recorded.

Suitably, the skew compensating method further includes the step of information about a position of the optical disc where the data is reproduced and the jitter In the position where the data Is reproduced.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:

FIG. 1 is a view illustrating the construction of a conventional optical disc device for recording/reproducing data in an optical disc;
FIGS. 2A to 2C are graphs illustrating a jitter generated due to a skew of an optical pickup unit;
FIG. 3 is a block diagram illustrating the construction of an optical disc device according to an embodiment of the present invention;
FIG. 4 is a view illustrating the structure of an optical pickup unit that is included In the optical disc device of FIG. 3;
FIG. 5 is a graph illustrating a signal for adjusting a skew of an optical pickup unit within a specified range in the optical disc device of FIG. 3;
FIG. 6 is a graph illustrating the characteristics of jitter change according to a skew adjustment signal as illustrated in FIG. 5; and
FIG. 7 is a flowchart illustrating a skew compensating method for an optical disc device according to an embodiment of the present invention.

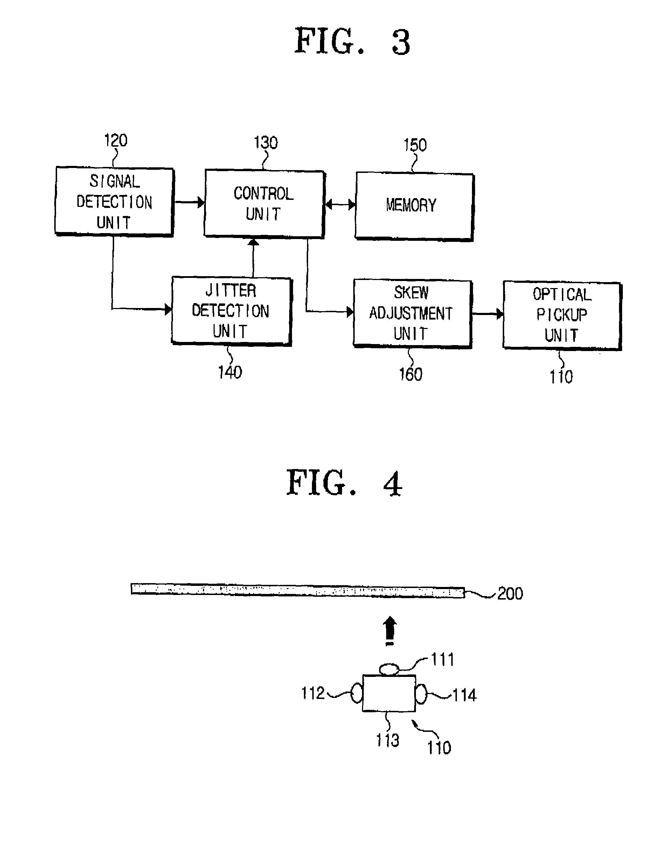

FIG. 3 is a block diagram illustrating the construction of an optical disc device according to an embodiment of the present invention. Referring to FIG. 3, the optical disc device shown includes an optical pickup unit 110, a signal detection unit 120, a control unit 130, a jitter detection unit 140, a memory 150 and a skew adjustment unit 160.

The optical pickup unit 110 serves to record or reproduce data by scanning a laser signal on a surface of an optical disc, That Is, the optical pickup unit 110 records data bits of '0' or '1' by forming prominences and depressions on a track of the optical disc by scanning the laser signal on the track of the optical disc, and reproduces a high-frequency signal corresponding to the recorded data by transmitting the laser signal.

FIG. 4 is a view illustrating the structure of an optical pickup unit 110. Referring to FIG. 4, the optical pickup unit 110 includes a light source 111 for irradiating a laser beam onto an optical disc 200, an actuator 113, and first and second focusing coils 112 and 114. In FIG. 4, the illustration of additional hardware such as a beam splitter for adjusting the direction of the laser signal, an object lens for focusing the laser signal, etc., is omitted.

The light source 111 is implemented by a general laser diode. The actuator 113 is fixed to the light source 111 and adjusts a beam spot of the laser signal by moving horizontally. Meanwhile, the first and second focusing coils 112 and 114 are installed at both sides of the actuator 113, and serve to lift the actuator 113 if specified drive signals are applied thereto. As a result, the up-and-down position of the light source 111 is adjusted to adjust the focus.

The signal detection unit 120 detects a high-frequency signal outputted during the reproduction of the data, and converts the detected high-frequency signal into an electric signal. The control unit 130 confirms the reproduced data by processing the converted signal.

Meanwhile, the jitter detection unit 140 calculates the jitter with respect to the signal detected by the signal detection unit 120. In this case, if the data is recorded in a C/D (Clock-to-Data) manner, the jitter detection unit 140 can calculate the jitter by confirming whether the recorded mark of a clock signal and the recorded mark of a data signal coincide with each other.

The skew adjustment unit 160 Is a part for adjusting the skew of the optical pickup unit 110. In order to adjust the skew, the skew adjustment unit 160 applies specified drive signals to the first and second focusing coils 112 and 114 of the optical pickup unit 110, respectively. The drive signals can be expressed by the follow-

ing equation.

[Equation 1]

$$DS1 = Focus + Tbias$$

$$DS2 = Focus - Tbias$$

In Equation 1, DS1 and DS2 denote drive signals applied to the first and second focusing coils 112 and 114. Focus denotes a signal for adjusting a focus of the laser signal, and Tbias denotes a skew adjustment signal of the optical pickup unit 110. The first and second focusing coils 112 and 114 can perform different lifting operations in accordance with the sizes of DS1 and DS2.

According to Equation 1, if Tbias is '0', DS1 and DS2 become signals having the same size. That is, since the respective drive signals become identical with each other according to Focus, the first and second focusing coils 112 and 114 operate in the same manner, and thus the up-and-down adjustment of the focus becomes possible.

By contrast, if Tblas is not '0', the sizes of DS1 and DS2 become different from each other. Accordingly, the first and second focusing coils 112 and 114 perform different lifting operations, respectively, and thus a skew of the optical pickup unit 110 occurs. The skew adjustment unit 160 consequently adjusts the skew by adjusting the size of Tbias.

The control unit 130 operates to record data on the optical disc 200 for each skew as changing the skew of the optical pickup unit 110 in a specified range by controlling the skew adjustment unit 160. Specfically, in the case of adjusting the skew using the drive signals as indicated in Equation 1, the control unit sets ±Tpeak value based on Tbias=0. Accordingly, the control unit 130 operates to record the data on the optical disc 200 for each Tbias while changing the Tbias value from -Tpeak value to +Tpeak value.

In this case, the control unit 130 operates to record the data in the specified area of the optical disc 200 that is not used by a user. Specifically, where the optical disc 200 is a DVD-R, DVD-RW or other disc provided with a PCA (Power Calibration Area), an optimum skew can be determined using the PCA. The PCA is an area preserved for a test recording in order to adjust the intensity of the laser beam to that most suitable to the corresponding disc before starting the recording. Meanwhile, other types of disc, e.g. a DVD-RAM is provided with a DTZ (Drive Test Zone) that is an area for testing a disc state, and thus the data can be recorded/reproduced using this area.

Meanwhile, the control unit 130 stores data recorded position of the optical disc 200 and skew information (or Tbias information) in the position in the memory 150.

Accordingly, if the data is recorded with respect to all the skews in a specified range, the control unit 130 operates to reproduce the data by scanning the laser signal on the data recorded area using the optical pickup unit 110. At this time, if the reproduced laser signal is outputted, the signal detection unit 120 detects this, and calculates the jitter of the signal detected by the jitter detection unit 140.

Consequently, the control unit 130 stores the information about a specified skew and a jitter size corresponding to the skew in the memory 150. Then, if the jitter detection is completed with respect to the whole skew range, the control unit 130 detects the skew that corresponds to the minimum jitter. Finally, the control unit 130 sets the present skew of the optical pickup unit 110 to the detected skew. With reference to Equation 1, the control unit adjusts the Tblas value to Tbias that corresponds to the minimum jitter, and supplies the adjusted Tbias to the first and second focusing coils 112 and 114.

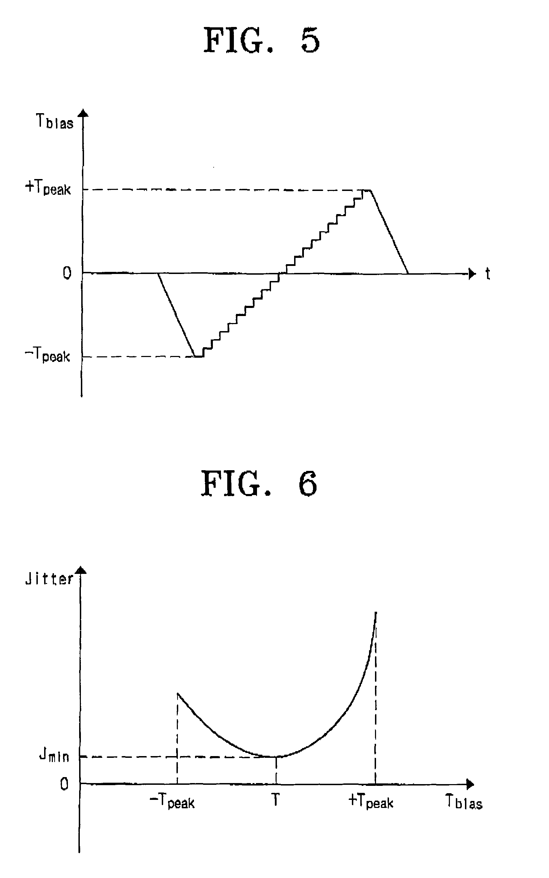

FIG. 5 is a graph illustrating a Tbias signal adjusted to change the skew of the optical pickup unit 110. Referring to FIG. 5, the control unit 130 changes the Tblas from the minimum value (-Tpeak) to the maximum value (+Tpeak) based on a point where Tblas is '0'. Accordingly, the skew is uniformly changed.

FIG. 6 is a graph illustrating the characteristics of jitter change according to the change of the Tbias signal. Referring to FIG. 6, at the points of -Tpeak and +Tpeak, a high jitter is measured, and if the Tbias signal has a specified value T, a minimum jitter is measured. Although In the case that the optical pickup unit 110 is ideally manufactured, the minimum jitter is measured if T is '0', there is in fact a great possibility that the minimum jitter is measured if T is a specified value near '0'. Accordingly, the control unit 130 sets the Tbias to T to compensate for the skew.

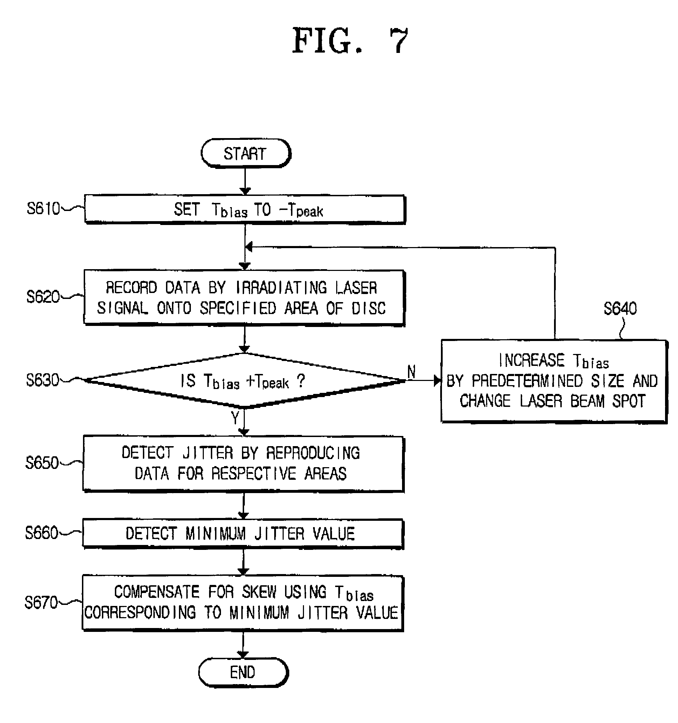

FIG. 7 is a flowchart illustrating the skew compensating method for an optical disc device according to an embodiment of the present invention.

Referring to FIG. 7, the control unit 130 sets Tbias to the minimum value (operation S610).

Then, the control unit 130 operates to record data by irradiating the laser signal onto a specified area of the disc (operation S620). In this case, it is preferable to use a specified test area such as the PCA area or the DTZ area of the disc.

Then, the control unit 130 confirms whether Tbias becomes the maximum value. If Tbias is not the maximum value, the control unit increases Tbias uniformly, and then moves the beam spot of the laser signal (operations S630 and S640).

If the data recording is completed with respect to Tbias of the whole range after the above-described step are repeated until Tbias becomes the maximum value, the control unit 130 calculates the jitter as reproducing the data recorded In the respective areas (operations S630 and S850). In this case, the control unit 130 records Tbias and the corresponding jitters in the memory 150.

If the jitters are calculated with respect to Tbias of the whole range, the control unit 130 searches for the minimum value among the calculated jitters (operation S660).

Consequently, the control unit 130 compensates for the skew of the optical pickup unit 110 by driving the first and second focusing coils 112 and 114 using Tbias corresponding to the minimum jitter (operation S670). Accordingly, the data can be recorded/reproduced in the optimum environment by making the vertical transmission of the laser signal possible by compensating for the skew of the optical pickup unit 110.

As described above, according to the present invention, the jitter can be minimized through compensating for the skew of the optical pickup unit during the data recording, and thus the problems of the loss of data caused by the jitter can be solved. Meanwhile, since the present Invention can be implemented without any separate tilt sensor, the size of the optical disc device itself can be minimized, and the reflecting characteristic of the recording medium can be reflected optimally by compensating for the skew during the data recording.

Although a few embodiments of the present Invention have been shown and described, it would be appreciated by those skilled In the art that changes may be made in these embodiments without departing from the principles and spirit of the invention, the scope of which is defined in the accompanying claims.

Attention is directed to all papers and documents which are filed concurrently with or previous to this specification in connection with this application and which are open to public inspection with this specification, and the contents of all such papers and documents are incorporated herein by reference.

All of the features disclosed In this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The Invention extends to any novel one, or any novel combination, of the features disclosed in this specification (including any accompanying claims, abstract and drawings), or to any novel one, or any novel combination, of the steps of any method or process so disclosed,

## Claims

1. An optical disc device for recording/reproducing data In an optical disc, comprising:

   an optical pickup unit (110) for scanning a laser signal onto a specified area of an optical disc (200);
   a skew adjustment unit (160) for changing a skew of the optical pickup unit (110);
   a signal detection unit (120) for detecting a signal being reproduced from the optical disc (200) by the laser signal;
   a jitter detection (140) unit for calculating a jitter of the signal detected by the signal detection unit (120); and
   a control unit (130) for controlling the skew adjustment unit (160) to compensate for the skew of the optical pickup unit (110) so that the compensated skew of the optical (110) pickup unit becomes the skew that corresponds to the minimum jitter.

2. The optical disc device as claimed in claim 1, wherein the control unit (130) records data in the specified area of the optical disc (200) while changing the skew of the optical pickup unit (110) within a specified range, calculates jitters corresponding to respective skews by reproducing the recorded data for respective areas, and then searches for the minimum jitter.

3. The optical disc device as claimed In claim 1 or 2, wherein the optical pickup unit (110) comprises:

   a light source (111) for outputting the laser signal;
   an actuator (113), combined with the light source, for adjusting a beam spot of the laser signal of the light source;
   a first focusing coil (112), connected to one side of the actuator (113), for lifting the actuator (113); and a second focusing coil (114), connected to the other side of the actuator (113), for lifting the actuator (113).

4. The optical disc device as claimed in claim 3, wherein the skew adjustment unit (160) changes the skew by adjusting respective lifting operations by applying specified drive signals expressed by a following equation:

$$DS1 = Focus + Tbias$$

$$DS2 = Focus - Tblas$$

where DS1 and DS2 denote drive signals applied to the first and second focusing coils (112, 114), Focus denotes a signal for adjusting a focus of the laser signal, and Tbias denotes a skew adjustment signal of the optical pickup unit (110).

5. The optical disc device as claimed in claim 2, 3 or 4 further comprising a memory (150) for recording information about a position of the optical disc (200) where the data is recorded and the skew when the data is recorded.

6. The optical disc device as claimed in claim 3, 4 or 5 wherein the light source (111) is a laser diode.

7. The optical device as claimed in claim 5, wherein the information is recorded in a clock-to-data manner.

8. A skew compensating method for an optical disc device having an optical pickup unit (110) for recording/reproducing data by scanning a laser signal onto an optical disc (200), the method comprising:

   recording the data on a specified area of the optical disc (200) while changing a skew of the optical pickup unit within a predetermined range;
   detecting a jitter as reproducing the data for respective areas on the optical disc (200);
   and setting the skew of the optical pickup unit (110) to the skew that corresponds to the minimum jitter.

9. The skew compensating method as claimed in claim 8, further comprising storing information about a position of the optical disc (200) where the data is recorded and the skew in the position where the data is recorded.

10. The skew compensating method as claimed in claim 8 or 9, further comprising storing information about a position of the optical disc (200) where the data is reproduced and the jitter in the position where the data is reproduced.

11. The skew compensating method as claimed in claim 8, wherein the specified area is a power calibration area or a drive test zone.

12. An optical disc apparatus for recording/reproducing data In an optical disc, comprising:

   an optical pickup (110) for scanning a laser signal onto an optical disc (200);
   a skew adjustment unit (160) for adjusting the skew of the optical pickup (110);
   a signal detection unit (120) for detecting a signal being reproduced from the optical pickup (110);
a jitter calculator (140) for calculating the jitter of the signal detected by the signal detection unit (120); and
a controller (130) for controlling the skew adjustment to adjust the skew to correspond to the minimum jitter.

13. The apparatus of claim 12, wherein the controller (130) records data on the skew adjustment as the skew is changed within a specified range, calculates jitters corresponding to respective skews, and then searches for the minimum jitter.

14. The apparatus of claim 12 or 13, wherein the optical pickup comprises:

   a light source (111) for outputting the laser signal;
   an actuator (113), connected to the light source (111), for adjusting a beam spot of the laser signal of the light source;
   a first focusing coil (112), attached to a side of the actuator (113), for lifting the actuator (113); and
   a second focusing coil (114), attached to an opposite side of the actuator (113), for lifting the actuator (113).

15. The apparatus of claim 3 or of claim 14, wherein the skew adjustment unit (130) changes the skew by applying a first specified drive signal to the first focusing coil (112) equal to the signal for adjusting a focus of the laser signal plus the skew adjustment and a second specified drive signal to the second focusing coil (114) equal to the signal for adjusting a focus of the laser signal minus the skew adjustment.

16. The apparatus of claim 13, further comprising a memory (150) for recording information about a position of the optical disc where the data is recorded and the skew when the data is recorded.

17. The apparatus claim 14, wherein the light source (111) is a laser diode.

18. The optical device as claimed in claim 16, wherein the information is recorded in a clock-to-data manner.

# FIG. 1

# FIG. 2

# FIG. 3

```
┌──────────────┐      ┌──────────────┐      ┌──────────────┐
│    120       │      │    130       │      │    150       │
│   SIGNAL     │      │              │      │              │
│  DETECTION   │─────▶│   CONTROL    │◀────▶│    MEMORY    │
│    UNIT      │      │    UNIT      │      │              │
└──────┬───────┘      └──────▲───┬───┘      └──────────────┘
       │                     │   │
       │              ┌──────┴───┴───┐      ┌──────────────┐      ┌──────────────┐
       │              │   JITTER     │      │    SKEW      │      │   OPTICAL    │
       └─────────────▶│  DETECTION   │      │  ADJUSTMENT  │─────▶│   PICKUP     │
                      │    UNIT      │      │    UNIT      │      │    UNIT      │
                      └──────────────┘      └──────────────┘      └──────────────┘
                           140                   160                   110
```

# FIG. 4

# FIG. 5

# FIG. 6

# FIG. 7

START

S610 — SET $T_{bias}$ TO $-T_{peak}$

S620 — RECORD DATA BY IRRADIATING LASER SIGNAL ONTO SPECIFIED AREA OF DISC

S630 — IS $T_{bias} + T_{peak}$ ?

N → S640 — INCREASE $T_{bias}$ BY PREDETERMINED SIZE AND CHANGE LASER BEAM SPOT

Y

S650 — DETECT JITTER BY REPRODUCING DATA FOR RESPECTIVE AREAS

S660 — DETECT MINIMUM JITTER VALUE

S670 — COMPENSATE FOR SKEW USING $T_{bias}$ CORRESPONDING TO MINIMUM JITTER VALUE

END